# EUROPÄISCHE PATENTSCHRIFT

(11) **EP 1 190 403 B1**
(45) Veröffentlichungstag und Bekanntmachung des Hinweises auf die Patenterteilung: **17.12.2003**
(21) Anmeldenummer: 00951231.0
(22) Anmeldetag: 27.06.2000
(51) Int. Cl.: G08C 13/00

(54) **SCHALTUNG ZUM EINSCHALTEN UND BETREIBEN VON BEZÜGLICH IHRER VERSORGUNGSSPANNUNG IN REIHE GESCHALTETEN GERÄTEN IN EINER STEUER- UND DATENÜBERTRAGUNGSANLAGE**
CIRCUIT FOR SWITCHING ON AND OPERATING UNITS CONNECTED IN SERIES WITH REGARD TO THEIR POWER SUPPLY VOLTAGE IN A CONTROL AND DATA TRANSMISSION SYSTEM
CIRCUIT POUR ENCLENCHER ET ACTIONNER DES APPAREILS CONNECTES EN SERIE DANS UNE INSTALLATION DE COMMANDE ET DE TRANSMISSION DE DONNEES, EN CE QUI CONCERNE LEUR TENSION D'ALIMENTATION

(30) Priorität: 28.06.1999 DE 19929641
(43) Veröffentlichungstag der Anmeldung: 27.03.2002
(73) Patentinhaber: Phoenix Contact GmbH & Co. KG, 32825 Blomberg (DE)
(72) Erfinder: GREWE, Harald, D-33175 Bad Lippspringe (DE); BEHR, Thorsten, D-32805 Horn-Bad Meinberg (DE); OSTER, Viktor, D-32825 Blomberg (DE); HANNIBAL, Frank, D-32825 Blomberg (DE)
(74) Vertreter: Herden, Andreas F.
(86) Internationale Anmeldenummer: DE0002017
(87) Internationale Veröffentlichungsnummer: WO01001364

(56) Entgegenhaltungen:
- EP-A- 0 551 114
- US-A- 4 623 884

## Beschreibung

Die Erfindung betrifft eine Vorrichtung für bezüglich der Versorgungsspannung in Reihe angeordnete Baugruppen einer Steuer- und Datenübertragungsanlage; insbesondere für Busteilnehmer in einem Automatisierungsbussystem.

Baugruppen einer Steuer- und Datenübertragungsanlage, d.h. elektrische Komponenten und Geräte, die beispielsweise zum Aufbau eines Automatisierungsbussystems verwendet werden, sind häufig hintereinander an die Versorgungsspannung angeschlossen. Zu diesem Zweck weisen die Geräte im allgemeinen einen Versorgungsspannungseingang und einen diesem zugeordneten Versorgungsspannungsausgang auf, wobei an letzteren das nachfolgende Gerät mit seinem Versorgungsspannungseingang angeschlossen wird. Weist ein einzelnes Gerät einer Anzahl von derartig in Reihe geschalteter Geräte einen Kurzschluß auf, so bricht im allgemeinen für alle Geräte die Versorgungsspannung zusammen, bzw. kann die gesamte Kette der Geräte oder Baugruppen nicht in Betrieb genommen werden, da das Versorgungsnetzteil aufgrund des Kurzschlusses seine Ausgangsspannung reduziert, so daß die Funktion von Einzelgeräten infrage gestellt ist. Weiterhin ist eine Fehlerdiagnose unmöglich, da alle Geräte nicht betriebsbereit sind. Das defekte Gerät kann nur dadurch ermittelt werden, daß alle Geräte aus der Reihe entfernt und einzeln in Betrieb genommen werden.

Eine derartige Vorgehensweise ist jedoch für den Betrieb heutiger sehr komplexer Automatisierungsbussysteme extrem arbeitsintensiv und zeitaufwendig.
EP 0 551 114 offenbart eine Anordnung zur Informationsübertragung, bei der jede Basisstation mit Ihren Verbrauchern zwei Anschußseiten für die Energieversorgung aufweist. Im Falle einer Überlast beziehungsweise eines Kurzschlusses wird eine Anschlußseite getrennt. Über die andere Anschlußseite kann die Basisstation dann weiter mit Spannung versorgt werden. Nachteilig an dieser Vorrichtung ist, daß zwei Anschlußseiten für die Energieversorgung erforderlich sind.

Aufgabe der Erfindung ist es somit, eine Vorrichtung bereitzustellen mit welcher bezüglich ihrer Versorgungsspannung in Reihe geschaltete Baugruppen einer Steuer- und Datenübertragungsanlage betriebssicher eingeschaltet werden können ohne das die Gefahr besteht, daß die Gesamtanlage oder zumindest größere Abschnitte vollkommen ausfallen und wobei nicht mehrere Anschlüsse oder Einrichtungen zur Spannungsversorgung der Vorrichtung Erforderlich sind.

Diese Aufgabe wird durch eine Vorrichtung mit den Merkmalen des Anspruchs 1, eine Steuer- und Datenübertragungsanlage mit den Merkmalen des Anspruchs 11 bzw. mit einem Verfahren zum Aufschalten und Betreiben einer derartigen Vorrichtung nach Anspruch 13 gelöst.

Danach weist die erfindungsgemäße Vorrichtung zumindest einen Versorgungsspannungseingang und zumindest einen diesem zugeordneten Versorgungsspannungsausgang auf, wobei wenigstens eine erste Einrichtung zum lösbaren Verbinden des Versorgungsspannungseingangs mit dem zugeordneten Versorgungsspannungsausgang sowie eine zweite Einrichtung zur Erfassung einer elektrischen Last und/oder zur Erfassung des Versorgungsstromes umfaßt ist. Im Ansprechen auf die Erfassung der elektrischen Last und/oder des Versorgungsstromes kann der Versorgungsspannungsausgang mit dem versorgungsspannungseingang verbunden werden. Wird beispielsweise ein Kurzschluß am Versorgungsspannungsausgang festgestellt, so wird dieser nicht mit dem Versorgungsspannungseingang verbunden, womit eine Überlastung der Einrichtung, welche die Versorgungsspannung bereitstellt, sicher verhindert werden kann. Wird dagegen keine Überlast oder kein Kurzschluß festgestellt, so wird der Versorgungsspannungsausgang mit dem Versorgungsspannungseingang verbunden und damit die am Versorgungsspannungsausgang anliegende Baugruppe an die Versorgungsspannung angeschlossen.

Weiterhin kann auf diese Weise sichergestellt werden, daß nur die Baugruppe oder Verbindungsleitung von der Versorgungsspannung abgetrennt ist, welche den Kurzschluß oder die Überlast erzeugt hat, sowie die dem Fehlerort nachgeordneten Baugruppen. Hierfür kann jede der bezüglich der Versorgungsspannung in Reihe angeordneten Baugruppen eine erfindungsgemäße Vorrichtung aufweisen. Diese Vorrichtung ist der jeweiligen Baugruppe bezüglich der Versorgungsspannung vor- oder nachgeschaltet. Somit lassen sich alle in Benutzung befindlichen und bezüglich der Versorgungsspannung in Reihe geschalteten Baugruppen mit der erfindungsgemäßen Vorrichtung nachrüsten. Es kann jedoch auch vorgesehen sein, daß die erfindungsgemäße Vorrichtung direkt in der Baugruppe, beispielsweise einem Busteilnehmer integriert ist, was eine kompakte Bauweise der erfinderischen Vorrichtung mit einer Baugruppe einer Steuer- und Datenübertragungsanlage ermöglicht.

Zusätzlich läßt sich der Fehlerort in einer in Reihe angeordneten Baugruppe mittels der erfindungsgemäßen Vorrichtung leicht feststellen, da die Baugruppen vor dem Fehlerort weiter in Betrieb gehalten werden können, ohne daß die Versorgungsspannung zusammenbricht.

Je nach Anforderung kann als Einrichtung zum lösbaren Verbinden des Versorgungsspannungseingangs mit dem zugeordneten Versorgungsspannungsausgang ein Relais, ein Schütz- und/oder ein Halbleiterschalter zum Einsatz kommen. Der verwendete Schalter trennt dabei in seiner Ruhestellung den Versorgungsspannungseingang vom zugeordneten Versorgungsspannungsausgang. Ein Halbleiterschalter hat dabei den Vorteil, daß er wartungsfrei ist und elektrisch bzw. elektronisch leicht ansteuerbar ist.

Ist die erfindungsgemäße Vorrichtung zur Anschaltung an den Automatisierungsbus eingerichtet, ist die Vorrichtung auch direkt durch das Steuersystem des Automatisierungsbussystems ansteuerbar. Beispielsweise kann auf diese Weise das Steuersystem direkt eine bestimmte Baugruppe über die Versorgungsspannung aus- oder anschalten. Zusätzlich wird ein Datenverkehr zwischen dem Steuersystem und der erfindungsgemäßen Vorrichtung ermöglicht.

Um die erfindungsgemäße Vorrichtung auf die jeweiligen Anfordernisse der zugeordneten Baugruppe anzupassen, kann eine Speichereinrichtung zum Speichern der Parametrierung der Einrichtungen der Vorrichtung umfaßt sein. Beispielsweise umfaßt die Parametrierung einen vorgegebenen Grenzwert des Versorgungsstromes und/oder der elektrischen Last, bei welchem bzw. welcher die erste Einrichtung den Versorgungsspannungsausgang vom Versorgungsspannungseingang trennt. Diese Parametrierung kann vorteilhafterweise manuell an der Vorrichtung selbst und/oder über den Automatisierungsbus erfolgen. Wie oben stehend schon erläutert, kann die Vorrichtung direkt in die zugeordnete, d.h. abzusichernde Baugruppe integriert werden. Dies hat insbesondere den Vorteil, daß eine eventuell schon vorhandene Busschnittstelle der Baugruppe, beispielsweise die Schnittstelle eines Busteilnehmer des Automatisierungsbussystems, auch für die erfindungsgemäße Vorrichtung zur Anschaltung an den Bus verwendet werden kann.

Vorteilhafterweise kann die erfindungsgemäße Vorrichtung jeweils für die Logik als auch für die Aktorik/Sensorik der zugeordneten Baugruppe getrennte Versorgungsspannungseingänge und -ausgänge aufweisen, womit eine Trennung bezüglich der Versorgungsspannung für die Logikschaltkreise als auch für die Aktorik-/Sensorik-Schaltkreise der zugeordneten Baugruppe ermöglicht werden. Da die jeweiligen Versorgungsspannungsausgänge von unabhängigen Schaltern bedient werden, kann beispielsweise ein Ausfall der Aktorik-Sensorik die betreffende Baugruppe mittels der Logikschaltkreise zumindest eingeschränkt, beispielsweise zu Diagnosezwecken, in Betrieb gehalten werden.

Die erfindungsgemäße Vorrichtung läßt sich in vielfältiger Weise beim Aufbau eines Automatisierungsbussystems, insbesondere beim Aufbau eines seriellen Automatisierungsbussystems verwenden. Zur Vereinfachung der Darstellung wird zuerst davon ausgegangen, daß die erfindungsgemäße Vorrichtung die ihr zugeordnete Baugruppe selbst umfaßt. Hierzu gleichbedeutend ist die Betrachtungsweise, daß die erfindungsgemäße Vorrichtung in die Baugruppe integriert ist.

Wie oben stehend erläutert und unten stehend bei der Beschreibung einiger Ausführungsbeispiele deutlich wird, ist die Erfindung jedoch hierauf nicht beschränkt, da prinzipiell jeder bezüglich der Versorgungsspannung in Reihe angeordnete Baugruppe einer Steuer- und Datenübertragungsanlage eine erfindungsgemäße Vorrichtung vorgeschaltet oder nachgeschaltet werden kann. In dieser Weise kann jede beliebige Steuer- und Datenübertragungsanlage mit erfindungsgemäßen Vorrichtungen nachgerüstet werden, indem bezüglich der Versorgungsspannung vor oder nach der jeweiligen Baugruppe eine erfindungsgemäße Vorichtung angeordnet wird.

Im einfachsten Fall ist eine Baugruppe, welche eine erfindungsgemäße Vorrichtung umfaßt, bezüglich ihrer Versorgungsspannung elektrisch in Reihe mit einer weiteren Baugruppe angeordnet, wobei die weitere Baugruppe der erstgenannten Baugruppe nachgeschaltet ist. Bei einem Fehler, beispielsweise einer Überlast oder einem Kurzschluß in der nachgeschalteten Baugruppe wird der Versorgungsspannungsausgang der ersten Baugruppe und damit auch der Versorgungsspannungseingang der nachgeschalteten Baugruppe durch die erfindungsgemäße Vorrichtung von der Versorgungsspannung getrennt, so daß die erste Baugruppe im Betrieb bleiben kann. Prinzipiell lassen sich auf diese Weise eine beliebige Anzahl von in Reihe angeordneten Baugruppen eines Automatisierungsbussystems bezüglich der Versorgungsspannung absichern. Eine optimale Absicherung durch die erfindungsgemäße Vorrichtung ist dann gegeben, wenn alle der in Reihe geschalteten Baugruppen, außer der letzten, eine erfindungsgemäße Vorrichtung aufweisen. Wenn jedoch die erfindungsgemäße Vorrichtung in der Baugruppe im wesentlichen vor den eigentlichen Schaltkreisen, d.h. Verbrauchern der Baugruppe angeordnet ist, in welchen bevorzugt eine Überlast oder ein Kurzschluß auftreten kann, sollte auch diese letzte Baugruppe in der Reihe mit der erfindungsgemäßen Vorrichtung ausgebildet sein, da ein Fehler durch die Verbraucher der Baugruppe mittels der zugeordneten erfindungsgemäßen Vorrichtung erkannt und durch Trennen von der Versorgungsspannung eliminiert wird, so daß die vorgeschalteten Baugruppen alle weiter betrieben werden können.

Tritt im Betrieb eine Überlast auf oder wird ein vorgegebener Versorgungsgrenzstrom überschritten, so kann durch die erfindungsgemäße Vorrichtung der Versorgungsspannungsausgang vom zugeordneten Versorgungsspannungseingang getrennt werden, so daß die dieser Baugruppe vorgeschalteten Baugruppen oder Geräte weiter betrieben werden können. Die Einrichtung zur Erfassung des fließenden Versorgungsstromes kann dabei beispielsweise mittels einer Differenzstrombildung auch zum Erkennen eines Erdschlusses eingerichtet sein.
Es ist in einer anderen Ausführungsform der Erfindung auch möglich, daß bei einem Fehlerfall der Versorgungsspannungsausgang strombegrenzt mit dem Versorgungsspannungseingang verbunden wird, so daß einerseits unter Umständen die nachfolgenden Baugruppen zumindest teilweise weiter betrieben werden können und andererseits eine Gefahr besteht, daß die vorgeschalteten Baugruppen aufgrund einer Überlastung der Versorgungsspannungseinrichtung für die in Reihe geschalteten Geräte ausfallen, da die Versorgungsspannung zusammenbricht. Ein derartiger Fehlerfall umfaßt das Auftreten einer elektrischen Überlast, aber keinen "harten" Kurzschluß, bei welchem die Versorgungsspannung trotz Strombegrenzung zusammenbrechen würde.

Die erfindungsgemäße Vorrichtung ermöglicht weiterhin die in Reihe geschalteten Geräte oder Baugruppen sicher in Betrieb zu nehmen. Dies kann, je nach Ausführungsform der Erfindung, entweder automatisch durch die Baugruppen selbst mittels sukzessiver Aufschaltung oder durch die Steuerung kontrolliert über den Bus realisiert werden. Die zuletzt aufgeschaltete Baugruppe, deren erfindungsgemäße Vorrichtung den Versorgungsspannungseingang nicht mehr mit dem Versorgungsspannungsausgang verbindet oder nur noch strombegrenzt verbindet, ist vorteilhafterweise zur Abgabe einer Fehlermeldung ausgebildet. Dabei wird der Fehler an der betreffenden Baugruppe bzw. der erfindungsgemäßen Vorrichtung angezeigt oder eine Fehlermeldung über den Bus zur Steuerung abgesandt. Um eine schnelle Identifizierung des Fehlerortes bereitzustellen, kann die Fehlermeldung ein Datum zur Identifizierung der betreffenden Baugruppe umfassen.

Die Erfindung wird im folgenden durch das Beschreiben einiger Ausführungsformen unter Zugrundelegen der beiliegenden Zeichnungen erläutert, wobei
- Fig. 1: in einer schematischen Blockdarstellung elektrisch in Reihe angeordnete Baugruppen eines Automatisierungsbussystems mit zugeordneten erfindungsgemäßen Vorrichtungen im Ruhezustand zeigt,
- Fig. 2: die Vorrichtungen der Fig. 1 in der Anschaltphase zeigt,
- Fig. 3: in einem schematischen Blockschaltbild elektrisch in Reihe angeordnete erfindungsgemäße Vorrichtungen mit integrierten Busteilnehmern veranschaulicht und
- Fig. 4: in einem schematischen Blockschaltbild wiederum eine Reihenschaltung von erfindungsgemäßen Vorrichtungen mit integrierten Busteilnehmern zeigt, wobei die erste Vorrichtung eine zusätzliche Einrichtung zur Erfassung des fließenden Versorgungsstromes aufweist.

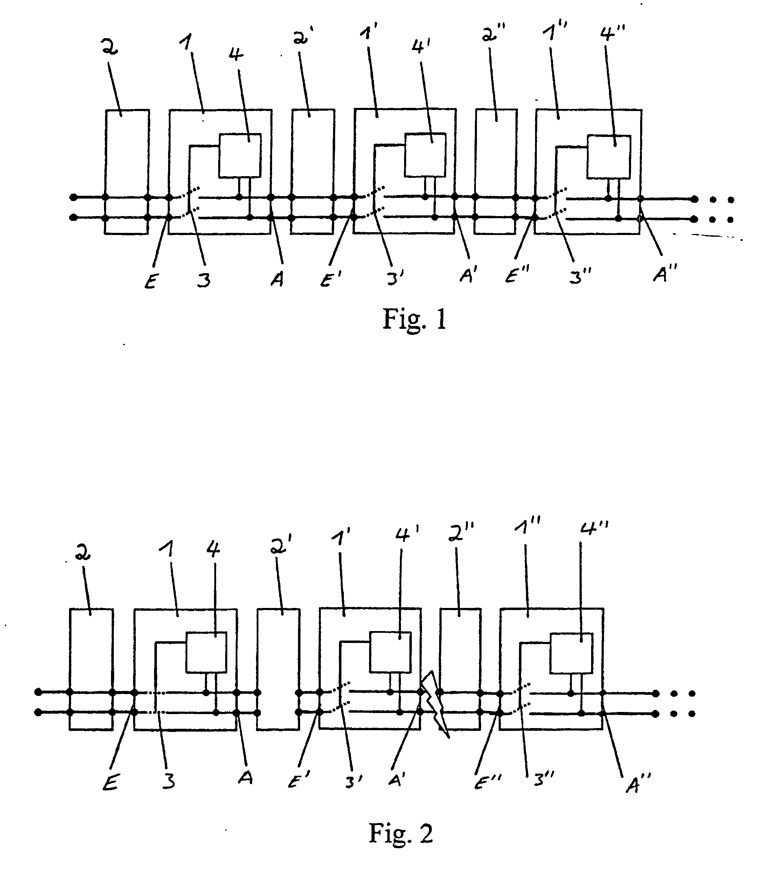

Eine erste Ausführungsform der erfindungsgemäßen Vorrichtung und deren Anordnung in einer Steuer- und Datenübertragungsanlage, welche vorliegend ein Automatisierungsbussystem ist, ist in Fig. 1 gezeigt. Fig. 1 stellt einen Ausschnitt des Automatisierungsbussystems dar, in welchem mehrere Busteilnehmer 2, 2', 2" bezüglich ihrer Versorgungsspannung in Reihe angeordnet sind. Zwischen diesen Baugruppen ist jeweils eine erfindungsgemäße Vorrichtung 1, 1', 1" angeordnet. Somit ist jedem Busteilnehmer eine erfindungsgemäße Vorrichtung zugeordnet. Es ist jedoch auch möglich, daß eine erfindungsgemäße Vorrichtung mehreren bezüglich der Versorgungsspannung in Reihe angeordneten Busteilnehmern zugeordnet ist. In diesem Fall ist bezüglich der Versorgungsspannung am Anfang der Reihenschaltung eine erfindungsgemäße Vorrichtung angeordnet, welcher die nachfolgend in Reihe angeordneten Busteilnehmer nachgeschaltet sind.

Jede der erfindungsgemäßen Vorrichtungen umfaßt zumindest einen Versorgungsspannungseingang E, E', E" und einen zugeordneten Versorgungsspannungsausgang A, A', A". Zwischen dem jeweiligen Versorgungsspannungseingang und - ausgang ist eine Einrichtung 3, 3', 3" angeordnet, die den jeweiligen Eingang mit dem zugeordneten Ausgang verbinden kann. Die Verbindungseinrichtung wird dabei von einer Einrichtung 4, 4', 4'' zur Ermittlung zumindest einer elektrischen Größe am Versorgungsspannungsausgang angesteuert.

Erfindungsgemäß bezeichnet der Begriff Versorgungsspannungsausgang Orte auf der Versorgungsspannungsführung, welche dem Verbindungsschalter der erfindungsgemäßen Vorrichtung nachgeordnet sind. Entsprechend bezeichnet der Begriff Versorgungsspannungseingang Orte auf der Versorgungsspannungsführung, welche dem Verbindungsschalter der erfindungsgemäßen Vorrichtung vorgeordnet sind. Etwaige Anschlußeinrichtungen für die Versorgungsspannung, beispielsweise zum Verbinden der erfindungsgemäßen Vorrichtungen mit weiterführenden Leitern sind natürlich in diese Definition mit eingeschlossen.

Eine Verbindungseinrichtung (3, 3', 3") ist für den Fall, daß keine Versorgungsspannung am Versorgungsspannungseingang der erfindungsgemäßen Vorrichtung anliegt, geöffnet. Liegt an der ersten erfindungsgemäßen Vorrichtung 1 keine Versorgungsspannung an, trifft dies auch auf alle nachfolgenden Vorrichtungen 1' und 1" zu und alle Verbindungseinrichtungen 3, 3' und 3'' sind geöffnet. In der dargestellten Ausführungsform ist die Verbindungseinrichtung 3, 3', 3" ein Halbleiterschalter, welcher von der Einrichtung 4, 4', 4" angesteuert wird. Diese Einrichtung 4, 4' bzw. 4" zur Ermittlung einer elektrischen Größe ist im vorliegenden Fall eine Einrichtung, welche zur Erfassung einer elektrischen Last am Versorgungsspannungsausgang ausgebildet ist. Überschreitet die ermittelte Last einen vorbestimmten Wert, so bleibt die jeweilige Verbindungseinrichtung 3, 3', 3" offen.
Die elektrischen Verbraucher der erfindungsgemäßen Vorrichtung 1, 1' bzw. 1" sind dabei am Versorgungsspannungseingang E, E' bzw. E" angeschlossen. Zur Ermittlung der elektrischen Last am Versorgungsspannungsausgang wird eine geringe Spannung strombegrenzt an den Versorgungsspannungsausgang angelegt, die so gering ist, daß die nachfolgende Baugruppe, d.h. der _nachfolgende Busteilnehmer, nicht in Betrieb genommen wird. Die Einrichtungen 4, 4', 4" weisen jeweils eine Strommeßvorrichtung auf, mit welcher der fließende Strom über den Versorgungsspannungsausgang erfaßt werden kann. Überschreitet der ermittelte Stromfluß einen vorbestimmten Wert oder spricht gar die Strombegrenzung an, so kann die Versorgungsspannung, welche am jeweiligen Versorgungsspannungseingang anliegt, nicht zum zugeordneten Versorgungsspannungsausgang weiter geschaltet werden und die Verbindungseinrichtung 3, 3', 3", d.h. der jeweilige Halbleiterschalter, bleibt offen. Auf diese Weise wird einerseits eine Überlast in der nachfolgenden Versorgungsspannungsleitung oder in einem der nachfolgenden Busteilnehmern sicher erkannt und weiterhin durch das Nichtschließen des Halbleiterschalters verhindert, daß die Spannungsversorgung für alle in Reihe geschalteten Busteilnehmer zusammenbricht.

Die Wirkungsweise der erfindungsgemäßen Vorrichtung zeigt sich insbesondere beim Einschalten der Spannungsversorgung für den in Fig. 1 gezeigten Busabschnitt. Fig. 2 stellt den Endzustand für den Fall dar, daß beim Einschalten eine beispielhafte Überlast im dritten Verbraucher 2" vor der dritten erfindungsgemäßen Vorrichtung 1" vorliegt und erkannt wurde. Beim Einschalten der Spannungsversorgung für die bezüglich der Versorgungsspannung in Reihe angeordneten Busteilnehmer 2, 2' und 2" liegt zuerst die Versorgungsspannung am ersten Busteilnehmer 2 an. In diesem wird die Versorgungsspannung hindurch geschleift und liegt damit auch an der erfindungsgemäßen Vorrichtung 1 an. Zuerst ist deren Verbindungseinrichtung 3 geöffnet, so daß an deren Versorgungsspannungsausgang A keine Versorgungsspannung anliegt und demnach der nachfolgende Busteilnehmer 2' nicht angeschaltet ist. Sobald die Versorgungsspannung am Versorgungsspannungseingang der Vorrichtung 1 anliegt, läuft ein in der Vorrichtung abgelegtes Einschaltverfahren automatisch ab. Hierbei wird zuerst die am Versorgungsspannungsausgang anliegende elektrische Last ermittelt. Dies geschieht dadurch, daß eine geringe Spannung strombegrenzt an den Versorgungsspannungsausgang A der Vorrichtung 1 angelegt und der hierdurch erzeugte Stromfluß mittels der Einrichtung 4 ermittelt wird. Die geringe Spannung beträgt in der beschriebenen Ausführungsform nur wenige Volt, z.B. ca. 3 Volt liegt somit weit unter der von den Busteilnehmern benötigten 24 Volt, so daß der nachfolgende Busteilnehmer 2' durch das Anlegen der geringen Spannung nicht angeschaltet wird.

Mittels dieser Maßnahme wird die Versorgungsspannungsleitung von der Vorrichtung 1 bis zum Busteilnehmer 2', sowie die Spannungsversorgungsleitung von diesem Busteilnehmer bis zur Vorrichtung 1' und der Busteilnehmer 2' selbst überprüft. Eine vorhandene elektrische Überlast aufgrund eines Fehlers oder gar ein Kurzschluß innerhalb der genannten Bereiche wird somit festgestellt. Im vorliegenden Fall liegt keine elektrische Überlast vor, so daß die Einrichtung 3 zum Verbinden des Versorgungsspannungseingangs E mit dem zugeordneten Versorgungsspannungsausgang A derart angesteuert wird, daß die Einrichtung 3 den Aus- und den Eingang miteinander verbindet so daß die Versorgungsspannung nun im vollen Umfang am Versorgungsspannungsausgang A und damit auch am zweiten Busteilnehmer 2' anliegt, womit dieser auch angeschaltet ist. Wie im ersten Busteilnehmer wird die Versorgungsspannung wieder durch den Busteilnehmer hindurch geschleift und liegt damit am Versorgungsspannungseingang E' der zweiten erfindungsgemäßen Vorrichtung 1' an. Auch in der zweiten Vorrichtung 2' läuft nun das beschriebene Anschaltverfahren ab. Hierbei wird jedoch eine Überlast im dritten Verbraucher 2" erkannt. Im Gegensatz zum Ablauf in der ersten erfindungsgemäßen Vorrichtung 1 wird die Einrichtung 3' der Vorrichtung 1' nicht zum Verbinden des Versorgungsspannungseingangs mit dem zugeordneten Versorgungsspannungsausgang angesteuert, so daß die Einrichtung 3' offen bleibt. Auf diese Weise verhindert die erfindungsgemäße Vorrichtung 1', daß durch die Überlast alle Busteilnehmer der bezüglich der Versorgungsspannung in Reihe angeordneten Busteilnehmer wegen der Überlastung des Versorgungsspannungsnetzteils ausfallen. Statt dessen werden nur all die Busteilnehmer angeschaltet, welche bezüglich der Reihenanordnung vor dem Fehlerort liegen. Die zuletzt nur teilweise angeschaltete Vorrichtung 1' zeigt den aufgetretenen Anschaltfehler mittels einer in Fig. 2 nicht dargestellten Anzeigeeinrichtung an. Erfindungsgemäß ist eine Vorrichtung dann nur teilweise angeschaltet, wenn die Vorrichtung zwar elektrisch versorgt und in Betrieb, die Verbindungseinrichtung, hier 3', jedoch offen ist. Auf die beschriebene Weise, d.h. mittels einer Fehleranzeige der nicht vollständig angeschalteten erfindungsgemäßen Vorrichtung ist eine Fehlersuche auch bei einer Vielzahl von bezüglich der Versorgungsspannung in Reihe angeordneten Baugruppen, beispielsweise Busteilnehmern einfach durchzuführen.

Um die erfindungsgemäße Vorrichtung flexibel auf die jeweiligen Bedürfnisse, insbesondere auf die von den jeweiligen Busteilnehmer abhängigen Versorgungsströme anpassen zu können, umfassen die Vorrichtungen 1, 1' und 1" jeweils eine Einrichtung zur Parametrierung der Vorrichtung. Manuell kann beispielsweise an den jeweiligen Vorrichtungen die maximal erlaubte elektrische Last am Versorgungsspannungsausgang eingestellt werden, womit das Ansprechverhalten der Verbindungseinrichtung 3, 3', 3" festgelegt wird.

Während des Betriebs wird in der beschriebenen Ausführungsform mittels der Einrichtung 4, 4' bzw. 4'' der fliessende Versorgungsstrom erfaßt und bei Überschreiten eines vorbestimmten Wertes die Einrichtung 3, 3' bzw. 3" zum Lösen der Verbindung des bestimmten Versorgungsspannungseingangs vom zugeordneten Versorgungsspannungsausgang angesteuert.

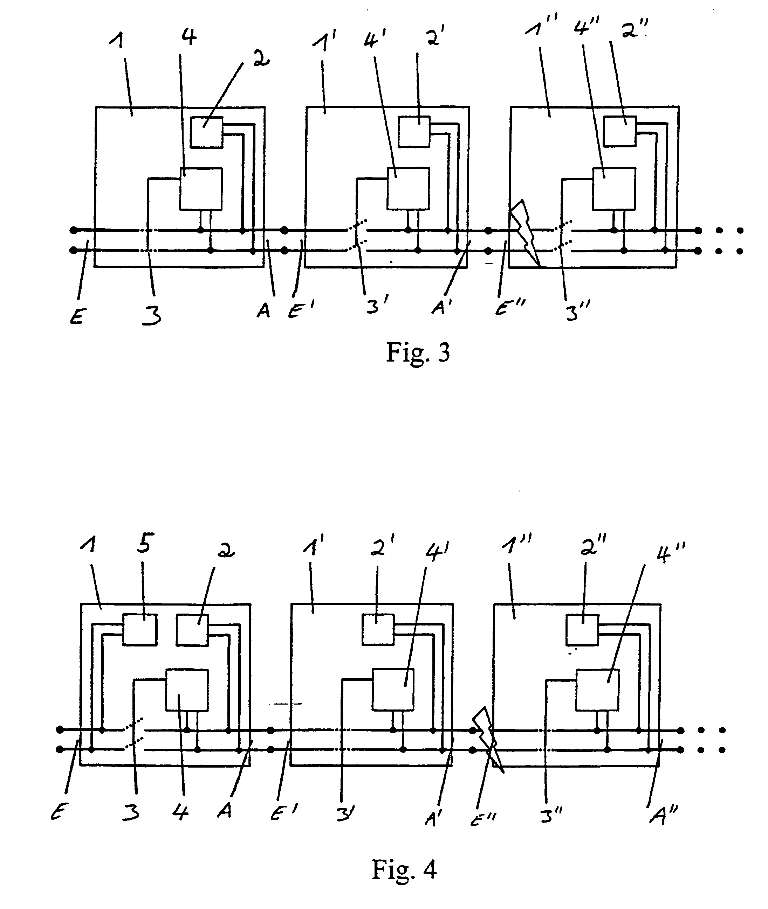

Eine weitere Ausführungsform der Erfindung und deren Einsatz in einem Automatisierungsbussystem ist in der schematischen Blockschaltdarstellung der Fig. 3 gezeigt. Wiederum sind als Teil einer Steuer- und Datenübertragungsanlage drei erfindungsgemäße Vorrichtungen 1, 1' und 1" einschließlich der zugeordneten Busteilnehmer 2, 2' und 2'' bezüglich der Versorgungsspannung in Reihe angeordnet. Dabei ist der Busteilnehmer jeweils in die erfindungsgemäße Vorrichtung integriert. In der dargestellten Ausführungsform sind die jeweiligen Busteilnehmer, d.h. die elektrischen Verbraucher des Busteilnehmers, der jeweiligen Einrichtung zur Erfassung eines Kurzschlusses 4, 4', 4" elektrisch nachgeschaltet, so daß die erfindungsgemäße Vorrichtung auch den zugeordneten Busteilnehmer im Hinblick auf einen Kurzschluß überprüft. In der in Fig. 3 dargestellten Ausführungsform der Erfindung ist die Einrichtung 4, 4' bzw. 4'' jeweils zur Erfassung eines Kurzschlusses ausgebildet. Hierfür prägt diese bei geöffneter Verbindungseinrichtung 3, 3' bzw. 3" einen vorbestimmten Strom in den jeweiligen Versorgungsspannungsausgang ein. Ein dem Versorgungsspannungsausgang nachgeordneter Kurzschluß hat einen Spannungsabfall am Versorgungsspannungsausgang zur Folge, welcher erfaßt wird. Im Ansprechen auf den ermittelten Kurzschluß in der nachfolgenden Versorgungsspannungsleitung oder den nachfolgenden Busteilnehmer bleibt die Verbindungseinrichtung offen, so daß letztlich am Versorgungsspannungsausgang der jeweiligen Vorrichtung keine Spannung anliegt. Dies trifft damit auch auf den in der erfindungsgemäßen Vorrichtung enthaltenen Busteilnehmer zu, so daß auch dieser nicht angeschaltet wird. In einer anderen Ausführungsform der Erfindung sind jedoch nicht alle Einrichtungen oder Verbraucher des Busteilnehmers hinter, sondern zumindest teilweise vor der jeweiligen Verbindungseinrichtung 3, 3' bzw. 3" angeordnet. Liegt demnach am Versorgungsspannungseingang eine Versorgungsspannung an, so ist der Busteilnehmer zumindest teilweise angeschaltet. Dies trifft insbesondere auf eine besondere Ausführungsform der Erfindung zu, bei welcher die Busanschaltung des Busteilnehmers bezüglich ihrer Versorgungsspannung vor der Verbindungseinrichtung angeordnet ist, so daß die Busanschaltung mit Anlegen einer Spannung an den Versorgungsspannungseingang funktionstüchtig ist. Diese Busanschaltung des Busteilnehmers wird auch zur Parametrierung der Verbindungseinrichtung 3, 3' bzw. 3" verwendet. Hierfür weist die erfindungsgemäße Vorrichtung in der speziellen Ausführungsform eine Speichereinrichtung zum Speichern der über den Bus erfolgten Parametrierung auf.

Mit dem schon oben stehend beschriebenen Verfahren zum Aufschalten der Vorrichtungen bzw. der Busteilnehmer wird auch in dem in Fig. 3 dargestellten Fall ein Kurzschluß an der Versorgungsspannungsverbindung zwischen der zweiten und dritten erfindungsgemäßen Vorrichtung erkannt und somit die Verbindungseinrichtungen 3' und 3'' nicht geschlossen, womit die zugeordneten Busteilnehmer 2' und 2" nicht aufgeschaltet werden. Die erste erfindungsgemäße Vorrichtung 1 einschließlich des zugeordneten Busteilnehmers 2 sind jedoch beide vorschriftsmäßig angeschaltet worden.

In Fig. 4 ist mit der erfindungsgemäßen Vorrichtung 1 eine andere Weiterbildung der erfindungsgemäßen Vorrichtung bezeichnet. Die Einrichtungen zur Ermittlung einer elektrischen Größe 4, 4', 4" entsprechen denen der Fig. 3, d.h. ein Fehler in der nachfolgenden Versorgungsspannungsleitung oder dem nachfolgenden Busteilnehmer wird mittels Einprägen eines Stromes am jeweiligen Versorgungsspannungsausgang erkannt. weiterhin sind die jeweiligen zugeordneten Busteilnehmer 2 in die Vorrichtungen integriert, wobei die Busanschaltung wie in Figur 3 nicht dargestellt ist. Im Unterschied zu den erfindungsgemäßen Vorrichtungen der Fig. 3 umfaßt die erste Vorrichtung 1 weiterhin eine Vorrichtung zur Erfassung des fließenden Versorgungsstromes. Dabei umfaßt dieser fließende Versorgungsstrom beim fehlerfreien Betrieb zumindest den Versorgungstrom der in Reihe angeordneten Baugruppen und den Versorgungsstrom der zugeordneten erfindungsgemäßen Vorrichtungen. Die Einrichtung 5 ist in der beschriebenen Ausführungsform direkt hinter dem Versorgungsspannungseingang E der Vorrichtung 1 angeordnet, sie kann jedoch beispielsweise auch am Versorgungsspannungsausgang A der Vorrichtung angeordnet werden. Die Einrichtung mißt im Betrieb der nur ausschnittsweise dargestellten Reihenschaltung von erfindungsgemäßen Vorrichtungen mit den zugeordneten Busteilnehmern den fließenden Versorgungsstrom. Da die zusätzliche Einrichtung am Anfang der Reihenschaltung angeordnet ist, wird damit eine elektrische Überlast oder ein Kurzschluß nach dem Aufschalten aller in Reihe angeordneten Vorrichtungen mit zugeordneten Baugruppen zuverlässig erfaßt. Auf diese weise wird ein erhöhter Strombedarf der Reihenschaltung während des Betriebs der Steuer- und Datenübertragungsanlage sicher ermittelt und die notwendigen Maßnahmen eingeleitet.

Die Stromerfassungseinrichtung 5 ist zum Ansteuern der Verbindungseinrichtung 3 ausgebildet. Tritt beim Betrieb eine elektrische Überlast oder ein Kurzschluß auf, kann somit die erfindungsgemäße Vorrichtung 1 die Spannungsversorgung für alle der in Reihe angeordneten Vorrichtungen mit zugeordneten Busteilnehmern unterbrechen, indem der Versorgungsspannungseingang E vom Versorgungsspannungsausgang A durch entsprechendes Ansprechen der Einrichtung 3 getrennt wird. Die in Fig. 4 gezeigte Momentandarstellung kennzeichnet diese Situation.

Da durch das Trennen des Versorgungsspannungseingangs E vom Versorgungsspannungsausgang A alle anderen erfindungsgemäßen Vorrichtungen 1' und 1'' spannungslos sind, öffnen sich darauffolgend deren Einrichtungen 3' und 3''. Die Verbindungseinrichtung 3 ist als schneller Halbleiterschalter ausgebildet, somit liegt weiterhin die Versorgungsspannung am Versorgungsspannungseingang E A der Einrichtung 1 an, da das Netzteil der Versorgungsspannung weiter funktionstüchtig ist.

Wie oben stehend beschrieben, läuft deshalb nun das Aufschaltverfahren in der Vorrichtung 1 an. Da kein Kurzschluß am Versorgungsspannungsausgang A festgestellt werden kann, schaltet die Einrichtung 3 die Versorgungsspannung auf den Versorgungssgannungsausgang A Diese Versorgungsspannung liegt danach am Versorgungsspannungseingang E' der Vorrichtung 1' an, womit das Einschaltverfahren in der Vorrichtung 1' startet. Die Einprägung des Stromes durch die Einrichtung 4' in den Versorgungsspannungsausgang A' resultiert in der Erfassung des Kurzschlusses in der Vorrichtung 1'', wodurch die Verbindungseinrichtung 3' geöffnet bleibt. Der Einschaltvorgang ist damit beendet. Zusammengefaßt wird damit ein im Betrieb auftretender Kurzschluß erkannt und die bezüglich der Versorgungsspannung in Reihe geschalteten Busteilnehmer zuerst abgeschaltet und daraufhin wieder automatisch bis zum Fehlerort nacheinander, d.h. sukzessive angeschaltet.

Diese sukzessive Aufschaltung der einzelnen Busteilnehmer mittels der erfindungsgemäßen Vorrichtungen vollzieht sich natürlich auch beim üblichen "Anfahren" der Steuer- und Datenübertragungsanlage.

In einer nicht dargestellten Ausführungsform der Erfindung weist die erfindungsgemäße Vorrichtung jeweils für die Logik als auch für die Aktorik/Sensorik der zugeordneten Baugruppe getrennte und elektrisch unabhängige Versorgungsspannungseingänge und -ausgänge auf. Demnach fällt ein Busteilnehmer nicht vollkommen aus, wenn beispielsweise die Spannungsversorgung für die Aktorik/Sensorik ausgefallen ist, da die Logik des Busteilnehmers noch funktionstüchtig bleibt.

In einer weiteren Ausführungsform der Erfindung ist die Vorrichtung über eine Schnittstelle an den Automatisierungsbus zusätzlich von der Systemsteuerung anschalt- und steuerbar. Beispielsweise kann mittels der Steuerung bei Bedarf die Verbindungseinrichtung angesteuert werden um den Versorgungsspannungseingang mit dem zugeordneten Versorgungsspannungsausgang zu verbinden oder zu trennen. Die erfindungsgemäße Vorrichtung, welche nur teilweise aufgeschaltet wurde, d.h. deren Verbindungseinrichtung nicht zum Verbinden des Versorgungsspannungseingangs mit dem zugeordneten Versorgungsspannungsausgang angesteuert wurde, gibt über den Automatisierungsbus eine Fehlermeldung an die Steuerung ab. Diese Fehlermeldung umfaßt dabei ein Datum, mit welchem die betroffene Vorrichtung identifizierbar ist.

Die erfindungsgemäße Vorrichtung läßt sich prinzipiell in allen Steuer- und Datenübertragungsanlagen, also beispielsweise in Automatisierungsbussystemen und insbesondere auch in Systemen mit einem seriellen Automatisierungsbus wie einem Bus nach EN 50254 verwenden. Je nach Bedarf kann dabei jedem der bezüglich der Versorgungsspannung in Reihe angeordneten Baugruppen des Automatisierungsbussystems eine erfindungsgemäße Vorrichtung in der beschriebenen Art und Weise zugeordnet werden. Dies gilt sowohl für das gesamte System, aber inbesondere auch für Baugruppen eines einzelnen Lokalbusabschnitts oder einem Busstich des Automatisierungsbussystems. Es ist jedoch auch möglich, daß nur eine erfindungsgemäße Vorrichtung mehreren hintereinander angeordneten Baugruppen des Automatisierungsbussystems zugeordnet wird, so daß die betroffenen und bezüglich der Versorgungsspannung in Reihe angeordneten Baugruppen alle gemeinsam von der einzelnen erfindungsgemäßen Vorrichtung ein- bzw. ausgeschaltet werden.

In einer nicht dargestellten Ausführungsform ist die erfindungsgemäße Vorrichtung zur Erfassung eines Erdschlusses eingerichtet. Hierbei wird der Differenzstrom zwischen Plus und Minus der Versorgungsleitung erfaßt und im Ansprechen auf diesen Differenzstrom bei Überschreiten eines vorgegebenen Wertes der Versorgungsspannungseingang vom Versorgungsspannungsausgang getrennt, so daß der Versorgungsstrom für die dem Versorgungsspannungsausgang nachgeschalteten Komponenten unterbrochen ist.

## Patentansprüche

1. Vorrichtung (1, 1', 1") für bezüglich der Versorgungsspannung in Reihe angeordnete Baugruppen (2, 2', 2'') einer Steuer- und Datenübertragungsanlage, insbesondere für Busteilnehmer eines Automatisierungsbussystems mit
- zumindest einem Versorgungsspannungseingang (E, E', E'') und einem zugeordneten Versorgungsspannungausgang (A, A', A"), **gekennzeichnet durch**
- eine Einrichtung (3, 3', 3") zum Verbinden des Versorgungsspannungseingangs mit dem Versorgungsspannungsausgang unter Ansprechen auf eine
- Einrichtung (4, 4', 4'') zur Ermittlung zumindest einer elektrischen Größe am Versorgungsspannungsausgang.

2. Vorrichtung (1, 1', 1") nach Anspruch 1,
**dadurch gekennzeichnet, daß**
die Einrichtung (4, 4', 4") zur Ermittlung zumindest einer elektrischen Größe zur Erfassung einer elektrischen Last und/oder eines Kurzschlusses eingerichtet ist.

3. Vorrichtung nach Anspruch 1 oder 2,
**dadurch gekennzeichnet, daß**
die Vorrichtung (1, 1', 1") zur Erfassung des fließenden Versorgungsstromes ausgebildet ist.

4. Vorrichtung nach Anspruch 1,2 oder 3,
**dadurch gekennzeichnet, daß**
die Verbindungseinrichtung (3, 3', 3'') ein Relais, einen Schütz und/oder einen Halbleiterschalter umfaßt.

5. Vorrichtung nach einem der vorstehenden Ansprüche 1 bis 4,
**dadurch gekennzeichnet, daß**
die Vorrichtung (1, 1', 1') eine Anschalteinrichtung zum Anschalten an den Automatisierungsbus aufweist.

6. Vorrichtung nach einem der Ansprüche 1 bis 5,
**dadurch gekennzeichnet, daß**
die Vorrichtung (1, 1', 1") manuell und/oder über den Automatisierungsbus parametrierbar ausgebildet ist und zumindest eine Speichereinrichtung zum Speichern der Parametrierung aufweist.

7. Vorrichtung nach einem der Ansprüche 1 bis 6,
**dadurch gekennzeichnet, daß**
die Vorrichtung jeweils für die Logik als auch für die Aktorik/Sensorik der zugeordneten Baugruppe getrennte und elektrisch unabhängige Versorgungsspannungeingänge und - ausgänge aufweist.

8. Vorrichtung nach einem der Ansprüche 1 bis 7,
**dadurch gekennzeichnet, daß**
die Vorrichtung (1, 1', 1'') selbst die ihr zugeordnete Baugruppe (2, 2', 2'') einer Steuer- und Datenübertragungsanlage, insbesondere einen Busteilnehmers eines Automatisierungsbussystems umfaßt.

9. Vorrichtung nach Anspruch 8,
**dadurch gekennzeichnet, daß**
die Baugruppe (2, 2', 2 ") bezüglich ihrer Versorgungsspannung der Einrichtung (3, 3', 3'') zum Verbinden des Versorgungsspannungseingangs mit dem -ausgang nachgeschaltet ist.

10. Vorrichtung nach einem der Ansprüche 1 bis 9,
**dadurch gekennzeichnet, daß** die Vorrichtung zur Erfassung eines Erdschlusses eingerichtet ist.

11. Steuer- und Datenübertragungsanlage, insbesondere ein System mit einem seriellen Automatisierungsbus, die zumindest eine Vorrichtung (1, 1', 1'') nach einem der Ansprüche 1 bis 9 mit wenigstens einer zugeordneten Baugruppe (2, 2', 2 ") umfaßt, wobei die Baugruppe bezüglich ihrer Versorgungsspannung elektrisch in Reihe mit zumindest einer weiteren Baugruppe angeordnet-ist und die Vorrichtung der weiteren Baugruppe vorgeschaltet ist.

12. Steuer- und Datenübertragungsanlage nach Anspruch 11,
**dadurch gekennzeichnet, daß** der Automatisierungsbus ein Bus nach EN 50254 ist und zumindest der ersten Baugruppe (2) der bezüglich der Versorgungsspannung in Reihe angeordneten Baugruppen (2, 2', 2'') in einem Lokalbusabschnitt oder einem Busstich eine Vorrichtung nach einem der Ansprüche 1 bis 10 zugeordnet ist.

13. Verfahren zum Aufschalten und Betreiben einer Vorrichtung nach einem der Ansprüche 1 bis 10,
**gekennzeichnet durch** die Schritte
- a) Anlegen einer Versorgungsspannung an den Versorgungsspannungseingang der Vorrichtung (1, 1', 1")
- b) Erfassen einer elektrischen Last und/oder eines Kurzschlusses am Versorgungsspannungsausgang (A, A', A'')
- c) Ansteuern der Einrichtung (3, 3', 3") zum Verbinden des Versorgungsspannungseingangs (E, E', E'') mit dem zugeordneten Versorgungsspannungsausgang (A, A', A") unter Ansprechen auf die erfaßte elektrische Last und/oder einen Kurzschluß.

14. Verfahren nach Anspruch 13,
**dadurch gekennzeichnet, daß**
der Verfahrensschritt c) die Schritte umfaßt:
- c1) Vergleichen der erfaßten Last mit einem vorbestimmten Wert und
- c2) Verbinden des Versorgungsspannungseingangs (E, E', E") mit dem zugeordneten Versorgungsspannungsausgang (A, A', A") , wenn die erfaßte Last den vorbestimmten Wert nicht überschreitet.

15. Verfahren nach Anspruch 13,
**dadurch gekennzeichnet, daß**
der Verfahrensschritt c) den Schritt umfaßt:
- Verbinden des Versorgungsspannungseingangs (E, E', E") mit dem zugeordneten Versorgungsspannungsausgang (A, A', A"), wenn kein Kurzschluß erfaßt wurde.

16. Verfahren zum Aufschalten und Betreiben einer Vorrichtung gemäß einem der Ansprüche 3 bis 10 nach einem der Verfahrensansprüche 13 bis 15, umfassend die zusätzlichen Schritte
- Erfassen des fließenden Versorgungsstromes und
- Trennen der Verbindung des Versorgungsspannungseingangs (E, E', E") mit dem zugeordneten Versorgungsspannungsausgang (A, A'; A''), wenn der erfaßte Versorgungsstrom einen vorbestimmten Wert überschreitet.

17. Verfahren zum Aufschalten und Betreiben von in Reihe geschalteten Vorrichtungen in einer Steuer- und Datenübertragungsanlage nach einem der Ansprüche 11 oder 12,
**dadurch gekennzeichnet, daß**
die Vorrichtungen (1, 1', 1"), beginnend mit der ersten Vorrichtung (1), sukzessive jeweils nach einem der Verfahrensansprüche 13 bis 15 aufgeschaltet werden.

18. Verfahren nach Anspruch 17,
**dadurch gekennzeichnet, daß**
die Aufschaltung selbständig erfolgt oder über den Automatisierungsbus gesteuert wird.

19. Verfahren nach einem der Ansprüche 17 oder 18,
**dadurch gekennzeichnet, daß**
eine nur teilweise auf geschaltete Vorrichtung (1, 1', 1") eine Fehlermeldung zur Anzeige eines Kurzschlusses oder einer Überlast an deren Spannungsversorgungsausgang abgibt, wobei die Fehlermeldung an eine Anzeigeeinrichtung und/oder über den Automatisierungsbus zur Steuerung des Automatisierungsbussystems abgegeben wird.

20. Verfahren nach Anspruch 19,
**dadurch gekennzeichnet, daß**
die über den Automatisierungsbus abgegebene Fehlermeldung zumindest ein Datum zur Identifizierung der nur teilweise aufgeschalteten Vorrichtung (1, 1', 1") umfaßt.

## Claims

1. Apparatus, (1, 1', 1") for sub-assemblies (2, 2', 2") of a control and data transmission system, said sub-assemblies being disposed in series with respect to the supply voltage, more particularly for bus subscribers of an automation bus system with
- at least one supply voltage input (E, E', E") and an associated supply voltage output (A, A', A"), **characterised by**
- a device (3, 3', 3") for connecting the supply voltage input to the supply voltage output in response to a
- device (4, 4', 4") for detecting at least one electric variable at the supply voltage output.

2. Apparatus (1, 1', 1") according to claim 1, **characterised in that** the device (4, 4', 4") for detecting at least one electric variable is adapted to detect an electric load and/or a short-circuit.

3. Apparatus according to claim 1 or 2, **characterised in that** the apparatus (1, 1', 1") is constructed to detect the flowing supply current.

4. Apparatus according to claim 1, 2 or 3, **characterised in that** the connecting device (3, 3', 3") comprises a relay, a contactor and/or a semiconductor switch.

5. Apparatus according to any one of the preceding claims 1 to 4, **characterised in that** the apparatus (1, 1', 1") comprises a connecting device for connection to the automation bus.

6. Apparatus according to any one of claims 1 to 5, **characterised in that** the apparatus (1, 1', 1") is constructed to be parametrisable manually and/or via the automation bus and comprises at least one memory device for storing the parametrisation.

7. Apparatus according to any one of claims 1 to 6, **characterised in that** the apparatus comprises separate and electrically independent supply voltage inputs and outputs respectively for the logic and also for the actor/sensor systems of the associated sub-assembly.

8. Apparatus according to any one of claims 1 to 7, **characterised in that** the apparatus (1, 1', 1") itself comprises the sub-assembly (2, 2', 2") associated with it of a control and data transmission system, particularly a bus subscriber of an automation bus system.

9. Apparatus according to claim 8, **characterised in that** the sub-assembly (2, 2', 2") is connected downstream, in respect of its supply voltage, of the device (3, 3', 3") for connecting the supply voltage input to the output.

10. Apparatus according to any one of claims 1 to 9, **characterised in that** the device is adapted to detect an earth short-circuit.

11. A control and data transmission system, particularly a system having a serial automation bus comprising at least one apparatus (1, 1', 1") according to any one of claims 1 to 9 with at least one associated sub-assembly (2, 2', 2"), wherein the sub-assembly is disposed, with respect to its supply voltage, electrically in series with at least one other sub-assembly, and the apparatus is connected upstream of the additional sub-assembly.

12. A control and data transmission system according to claim 11, **characterised in that** the automation bus is a bus to EN 50254 and an apparatus according to any one of claims 1 to 10 is associated at least with the first sub-assembly (2) of the sub-assemblies (2, 2', 2") disposed in series with respect to the supply voltage, in a local bus section or a bus branch.

13. A method of switching in and operating an apparatus according to any one of claims 1 to 10, **characterised by** the steps:
a) application of a supply voltage to the supply voltage input of the apparatus (1, 1', 1"),
b) detecting an electric load and/or a short-circuit at the supply voltage output (A, A', A"),
c) actuating the device (3, 3', 3") for connecting the supply voltage input (E, E', E") to the associated supply voltage output (A, A', A") in response to the detected electric load and/or a short circuit.

14. A method according to claim 13, **characterised in that** the method step c) comprises the steps:
c1) comparing the detected load with a predetermined value and
c2) connecting the supply voltage input (E, E', E") to the associated supply voltage output (A, A', A") if the detected load does not exceed the predetermined value.

15. A method according to claim 13, **characterised in that** the method step c) comprises the step:
connecting the supply voltage input (E, E', E") to the associated supply voltage output (A, A', A") if no short circuit was detected.

16. A method of switching in and operating an apparatus according to any one of claims 3 to 10 in accordance with any one of the method claims 13 to 15, comprising the additional steps:
detecting the flowing supply current and
separating the connection between the supply voltage input (E, E', E") and the associated supply voltage output (A, A', A") if the detected supply current exceeds a predetermined value.

17. A method of switching in and operating series-connected apparatuses in a control and data transmission system according to claim 11 or 12, **characterised in that** the apparatuses (1, 1', 1") are switched on in accordance with any one of the method claims 13 to 15 successively and respectively starting with the first apparatus (1).

18. A method according to claim 17, **characterised in that** the switching in is effected independently or is controlled via the automation bus.

19. A method according to claim 17 or 18, **characterised in that** an apparatus (1, 1', 1") that has been only partially switched in delivers a fault message in order to indicate a short circuit or an overload at the voltage supply output thereof, the fault message being delivered to a display device and/or via the automation bus in order to control the automation bus system.

20. A method according to claim 19, **characterised in that** the fault message delivered via the automation bus comprises at least one item of data for identification of the apparatus (1, 1', 1") that has been only partially switched in.

## Revendications

1. Dispositif (1, 1', 1'') pour des modules (2, 2', 2'') d'installation de transmission de données et de commande disposés en série, relativement à la tension d'alimentation, notamment pour les participants à un bus d'un système de bus d'automatisation, comportant
- au moins une entrée de tension d'alimentation (E, E', E'') et une sortie de tension d'alimentation (A, A', A'') associée,
**caractérisé par**
- un dispositif (3, 3', 3") pour relier l'entrée de tension d'alimentation à la sortie de tension d'alimentation en réaction à
- un dispositif (4, 4', 4") pour l'élaboration d'au moins une grandeur électrique à la sortie de tension d'alimentation.

2. Dispositif (1, 1', 1'') selon la revendication 1, **caractérisé en ce que** le dispositif (4, 4', 4'') pour l'acquisition d'au moins une grandeur électrique est aménagée pour détecter une charge électrique et/ou un court-circuit.

3. Dispositif selon la revendication 1 ou 2, **caractérisé en ce que** le dispositif (1, 1', 1'') est constitué de façon à détecter le courant d'alimentation circulant.

4. Dispositif selon la revendication 1, 2 ou 3, **caractérisé en ce que** le dispositif de liaison (3, 3', 3 ") comprend un relais, un contacteur et/ou un commutateur à semi-conducteur.

5. Dispositif selon l'une quelconque des revendications précédentes 1 à 4, **caractérisé en ce que** le dispositif (1, 1', 1") présente un dispositif de raccordement pour le raccordement au bus d'automatisation.

6. Dispositif selon l'une quelconque des revendications 1 à 5, **caractérisé en ce que** le dispositif (1, 1', 1") est constitué de façon à être paramétrable manuellement et/ou par l'intermédiaire du bus d'automatisation et présente au moins un dispositif de stockage pour stocker le paramétrage.

7. Dispositif selon l'une quelconque des revendications 1 à 6, **caractérisé en ce que** le dispositif présente, à chaque fois aussi bien pour la logique que pour les actionneurs et les détecteurs des modules associés, des entrées et des sorties de tension d'alimentation séparées et électriquement indépendantes.

8. Dispositif selon l'une quelconque des revendications 1 à 7, **caractérisé en ce que** le dispositif (1, 1', 1'') lui-même comprend le module (2, 2', 2") qui lui est associé d'une installation de transmission de données et de commande, notamment un participant à un bus d'un système de bus d'automatisation.

9. Dispositif selon la revendication 8, **caractérisé en ce que** le module (2, 2', 2''), relativement à sa tension d'alimentation, est raccordé en aval du dispositif (3, 3', 3'') de liaison de l'entrée de tension d'alimentation à la sortie de tension d'alimentation.

10. Dispositif selon l'une quelconque des revendications 1 à 9, **caractérisé en ce que** le dispositif est aménagé pour détecter un défaut à la terre.

11. Installation de transmission de données et de commande, notamment d'un système avec un bus sériel d'automatisation, qui comprend au moins un dispositif (1, 1', 1") selon l'une quelconque des revendications 1 à 9, comportant au moins un module (2, 2', 2'') associé, le module, relativement à sa tension d'alimentation, étant disposé électriquement en série avec au moins un autre module et raccordé en amont du dispositif de l'autre module.

12. Installation de transmission de données et de commande selon la revendication 11, **caractérisée en ce que** le bus d'automatisation est un bus selon la norme EN 50254 et est associé au moins au premier module (2) des modules (2, 2', 2'') disposés en série, relativement à leur tension d'alimentation, dans un segment de bus local ou un repiquage de bus d'un dispositif selon l'une quelconque des revendications 1 à 10.

13. Procédé de raccordement et d'exploitation d'un dispositif selon l'une quelconque des revendications 1 à 10 **caractérisé par** les étapes suivantes :
- a) application d'une tension d'alimentation à l'entrée de tension d'alimentation du dispositif (1, 1', 1")
- b) détection d'une charge électrique et/ou d'un court-circuit à la sortie de tension d'alimentation (A, A', A")
- c) commande du dispositif (3, 3', 3'') pour relier l'entrée de tension d'alimentation (E, E', E'') à la sortie de tension d'alimentation (A, A', A'') associée, en réaction à la charge électrique et/ou au court-circuit détecté.

14. Procédé selon la revendication 13, **caractérisé en ce que** l'étape de procédé c) comprend les étapes de :
- c1) comparaison de la charge détectée à une valeur prédéterminée et
- c2) liaison de l'entrée de tension d'alimentation (E, E', E'') à la sortie de tension d'alimentation (A, A', A'') associée lorsque la charge détectée n'excède pas la valeur prédéterminée.

15. Procédé selon la revendication 13, **caractérisé en ce que** l'étape de procédé c) comprend l'étape de :
- liaison de l'entrée de tension d'alimentation (E, E' , E'') à la sortie de tension d'alimentation (A, A', A'') associée lorsqu'aucun court-circuit n'a été détecté.

16. Procédé de raccordement et d'exploitation d'un dispositif selon l'une quelconque des revendications 3 à 10, selon l'une des revendications du procédé 13 à 15, comprenant les étapes supplémentaires de
- détection du courant d'alimentation circulant et
- coupure de la liaison de l'entrée de tension d'alimentation (E, E', E'') avec la sortie de tension d'alimentation (A, A', A'') lorsque le courant d'alimentation détecté excède une valeur prédéterminée.

17. Procédé de raccordement et d'exploitation de dispositifs connectés en série dans une installation de transmission de données et de commande selon l'une des revendications 11 ou 12, **caractérisé en ce que** les dispositifs (1, 1', 1''), en commençant par le premier dispositif 1, sont raccordés successivement chaque fois selon l'une des revendications du procédé 13 à 15.

18. Procédé selon la revendication 17 **caractérisé en ce que** le raccordement s'effectue de lui-même ou par l'intermédiaire du bus d'automatisation.

19. Procédé selon l'une des revendications 17 ou 18, **caractérisé en ce qu'**un dispositif (1, 1', 1") qui n'est que partiellement raccordé émet un message d'erreur pour la signalisation d'un court-circuit ou d'une surcharge à sa sortie de tension d'alimentation, le message d'erreur étant communiqué à un dispositif de signalisation et/ou par l'intermédiaire du bus d'automatisation pour la commande du système de bus d'automatisation.

20. Procédé selon la revendication 19, **caractérisé en ce que** le message d'erreur communiqué par l'intermédiaire du bus d'automatisation comprend au moins une donnée pour l'identification du dispositif (1, 1', 1'') raccordé seulement partiellement.
